# EUROPÄISCHE PATENTANMELDUNG

(11) **EP 4 693 043 A1**
(43) Veröffentlichungstag der Anmeldung: **11.02.2026**
(21) Anmeldenummer: 24193847.1
(22) Anmeldetag: 09.08.2024
(51) Int. Cl.: G06F 9/50

(54) **REGISTRIERUNGSMODUL UND VERFAHREN ZUM BEREITSTELLEN EINER CONTAINERBASIERTEN ANWENDUNG**

(71) Anmelder: Siemens Aktiengesellschaft, 80333 München (DE)
(72) Erfinder: BODE, Sebastian, 59229 Ahlen (DE)
(74) Vertreter: Siemens Patent Attorneys

(57) **Zusammenfassung**

Das erfindungsgemäße Verfahren zur Bereitstellung einer containerbasierten Anwendung in einer Containervirtualisierung umfasst die Entgegennahme eines Abbildaufrufs, Erstellung eines mehrschichtigen Abbilds, Hinzufügung einer individualisierenden Schicht und Instanziierung des Abbilds auf einem Hostsystem zur Ausführung der Anwendung. Die erfindungsgemäße Bereitstellung unterscheidbarer Instanzen wird gelöst durch eine Containerregistrierung, bei der zumindest eine Schicht eines Containers im Zuge eines Abbildaufrufs erzeugt wird, sodass bei jedem Abbildaufruf eine andere Variante des Abbilds (Images) erzeugt und/oder bereitgestellt werden kann.

## Beschreibung

### Technisches Gebiet

Die Erfindung liegt auf dem technischen Gebiet einer Containervirtualisierung und betrifft ein Verfahren und ein Registrierungsmodul zur Bereitstellung einer containerbasierten Anwendung,

### Technischer Hintergrund

Containervirtualisierung ist eine bekannte Technik, um mehrere voneinander isolierte Anwendungen auf einem Rechner oder Hostsystem zum Ablauf zu bringen. Entwicklungsumgebungen und Betriebssoftware zur Isolierung von Anwendungen mit Hilfe der Containervirtualisierung vereinfachen auch eine Bereitstellung von Anwendungen, da sich ein Container leicht als Datei transportieren und installieren lässt. Container gewährleisten so eine Trennung und Verwaltung von auf einem oder mehreren Rechnern genutzten Ressourcen.

Es gibt Einsatzbereiche für Container, die es erforderlich machen, dass bestimmte Inhalte verschiedener Instanzen eines ansonsten gleichen Containers sich voneinander unterscheiden, sodass jede Instanz des Containers eine eigene Identität erhält. Dieses Erfordernis besteht im Allgemeinen in Umgebungen, in denen mehrere Instanzen Nachrichten austauschen und erhält insbesondere dann eine Bedeutung, wenn eine Zuordnung einer Nachricht zu einer bestimmten Instanz aus Gründen der Sicherheit erfolgen soll. Das Erfordernis besteht konsequenterweise auch in Fällen, in denen ausgeschlossen werden soll, dass Nachrichten von einer bestimmten Instanz stammen.

Zur Zuweisung einer Identität zu einer zum Ablauf gebrachten Instanz - hierin auch als containerbasierte Anwendung bezeichnet - werden üblicherweise herkömmliche identitätsstiftende Verfahren während der Ausführung der containerbasierten Anwendung angewandt. Beispielsweise werden Identitätsinformationen der zur Ausführung verwendeten Hardware verwendet. Diese Verfahren haben dort eine Grenze, wo mehrere Instanzen des Containers auf demselben Rechner oder Hostsystem ausgeführt werden, sodass eine eindeutige Zuordnung weiterhin nicht möglich ist. Des Weiteren existiert oftmals nur eine lose Kopplung zwischen den Instanzen und der Hardware, was die Nutzung von Hardware-Identitätsinformationen zusätzlich erschwert. Schließlich kann ein Zugriff auf Identitätsinformationen der zur Ausführung genutzten Hardware sogar gesperrt sein, da ein solcher Zugriff beispielsweise durch das Hostsystem nicht gewährt wird.

### Zusammenfassung der Erfindung

Aufgabe der Erfindung ist es, eine Bereitstellung unterscheidbarer Instanzen aus einem ansonsten gleichen Container zu ermöglichen, sodass ein jeweiliger instanziierter Container - und somit die jeweilige containerbasierte Anwendung - eine jeweils eigene Identität erhält.

Die Aufgabe wird gelöst durch ein Verfahren zum Bereitstellen einer containerbasierten Anwendung mit folgenden Schritten:
- Entgegennahme eines Abbildaufrufs zum Bereitstellen eines containerbasierten Abbilds;
- Verwendung oder Erstellung eines aus mehreren Schichten bestehenden containerbasierten Abbilds nach Maßgabe des Abbildaufrufs;
- Hinzufügung zumindest einer zusätzlichen individualisierenden Schicht zum containerbasierten Abbild, so dass sich das containerbasierte Abbild in zumindest einem Paramater von mindestens einem zuvor durch das Registrierungsmodul erzeugten containerbasierten Abbild unterscheidet;
- Instanziierung des containerbasierten Abbilds auf einem Hostsystem zum Betrieb der containerbasierten Anwendung.

Die oben genannten Schritte werden überwiegend von Seiten eines Registrierungsmoduls durchgeführt, oder zumindest auf dessen Veranlassung an Module zur Durchführung und Planung der Containervirtualisierung zur Ausführung angewiesen.

Die der Erfindung zugrundeliegende Aufgabe einer Bereitstellung unterscheidbarer Instanzen wird erfindungsgemäß gelöst durch eine Containerregistrierung, bei der zumindest eine Schicht eines Containers im Zuge eines Abbildaufrufs erzeugt wird, sodass bei jedem Abbildaufruf eine andere Variante des Abbilds (Images) erzeugt und/oder bereitgestellt werden kann.

Ein wesentlicher Unterschied der Erfindung im Vergleich zu bekannten Bereitstellungen containerbasierter Anwendungen besteht darin, dass variable Inhalte in einer Schicht des Abbildes hinzugefügt werden. Dies ermöglicht in vorteilhafter Weise, auf eine vormals notwendige zusätzliche oder parallele Übertragung dieser variablen Inhalte zu verzichten.

Eine solche parallele Übertragung war insbesondere in Anwendungsfällen erforderlich, bei denen Container ohne die Möglichkeit einer einfachen automatischen Konfiguration über externen Dateien erfolgen musste oder eine Trennung zwischen eigentlicher Konfiguration und Individualisierungsmerkmalen nicht möglich war.

Mit der Anwendung der Erfindung ist es nicht mehr notwendig, Konfigurationsdateien individuell anzupassen. Stattdessen kann eine Konfiguration einer containerbasierten Anwendung zum Beispiel an zentraler Stelle vorgenommen werden und eine Übertragung gemeinsam mit der Anwendung selbst erfolgen. Besonders vorteilhaft ist dies, wenn Konfigurationen für eine größere Gruppe von Instanzen ähnlich bzw. sogar nach einem einheitlichen Schema erfolgen sollen. Containerbasierte Anwendungen können verfügbare Rechenressourcen »ihres« Geräts - d.h. dem Gerät, auf dem diese zum Ablauf gebracht werden - in vorteilhafter Weise einem Koordinator bereitstellen. Dieser Koordinator kann größere Aufgaben im Netzwerk lösen, wobei die Anwendungen mit den gleichen Einstellungen verteilt und stets auf dem aktuellen Softwarestand gehalten werden. Gleichzeitig bleibt die individuelle Identifizierung der einzelnen Instanzen möglich, was beispielsweise notwendig sein kann, um die Vertrauenswürdigkeit einer Instanz anhand ihres bisherigen Verhaltens zu beurteilen.

Die der Erfindung zugrundeliegende Aufgabe wird weiterhin durch ein Registrierungsmodul zum Bereitstellen einer containerbasierten Anwendung in Zusammenwirkung mit einem Hostsystem zur Instanziierung des containerbasierten Abbilds und zum Betrieb der containerbasierten Anwendung gelöst, bei der das Registrierungsmodul folgendes umfasst:
- eine Schnittstelle zur Entgegennahme eines Abbildaufrufs zum Bereitstellen eines containerbasierten Abbilds;
- Steuerungsmittel zur Verwendung oder Erstellung eines aus mehreren Schichten bestehenden containerbasierten Abbilds nach Maßgabe des Abbildaufrufs;
- die Steuerungsmittel eingerichtet zur Hinzufügung zumindest einer zusätzlichen individualisierenden Schicht zum containerbasierten Abbild, so dass sich das containerbasierte Abbild in zumindest einem Paramater von mindestens einem zuvor durch das Registrierungsmodul erzeugten containerbasierten Abbild unterscheidet;
- die Schnittstelle eingerichtet zur Übertragung des containerbasierten Abbilds auf ein Hostsystem.

### Ausgestaltungen der Erfindung

Gemäß einer vorteilhaften Ausgestaltung ist eine Erfassung eines Abrufschemas als Bestandteil des Abbildaufrufs vorgesehen, wobei das Abrufschema eine Struktur des Containers, also der zu verwendenden Basisschichten und der zu Bildung der individualisierenden Schicht, insbesondere auch zur Bildung der individualisierenden Schicht zu verwendende Parameter, beschreibt. Hierbei kann vorgesehen sein, dass dem Registrierungsmodul ein Schema übergeben wird, wie ein Abbildaufruf in Form eines containerbasierten Abbilds oder Basisabbilds zuzüglich einer dynamisch im Zeitraum der Bereitstellung erzeugten Ergänzung in der individualisierenden Schicht umgesetzt werden soll.

Gemäß einer vorteilhaften Ausgestaltung ist vorgesehen, dass das Abrufschema zumindest eine Anweisung zur Verwendung eines Skripts oder einer Beschreibungssprache enthält, welche zur Erzeugung der individualisierenden Schicht verwendet werden soll. Es kann insbesondere vorgesehen sein, dass Skripte und ähnliche Beschreibungsdateien die Erzeugung der individualisierenden Schicht beschreiben. Im weiteren Verlauf dieser Beschreibung wird beispielsweise auf eine Funktion »randomkey« zur Erzeugung einer Zufallszahl Bezug genommen. Eine solche Funktion kann beispielsweise in Form eines Skripts oder einer Beschreibungssprache realisiert sein. In einem einfachen Ausführungsbeispiel beinhaltet der Funktionsaufruf »randomkey« keine Parameter. Denkbar ist aber eine weitere Parametrisierung, etwa randomkey128 oder randomkey256, bei denen Parameter wie 138 oder 256 beispielsweise die Anzahl der zu bildenden Zufallszahlen angeben.

Gemäß einer vorteilhaften Ausgestaltung ist vorgesehen, dass das Skript im Registrierungsmodul eine stets gleiche Funktion ausführt, um der individualisierenden Schicht Zufallsdaten hinzuzufügen. Diese Zufallsdaten können während der Laufzeit des Skripts in einen Entropiepool - also einem Vorrat an Zufallsdaten - eines Geräts eingehen, an dem die containerbasierte Anwendung zum Ablauf zu bringen ist, um kryptografisch sichere Zufallszahlen zu erzeugen.

Gemäß einer vorteilhaften Ausgestaltung ist vorgesehen, einen oder mehrere im Abbildaufruf enthaltene Parameter zu validieren. So kann eine Filterung zulässiger Parameter erfolgen. Soll beispielsweise eine Datei mit einer bestimmten Menge an Zufallsdaten erzeugt werden, wird die benötigte Menge an Zufallszahlen als Parameter spezifiziert. Von diesem Parameter kann aber gefordert sein, dass dieser nicht negativ sein oder einen bestimmten Wert nicht überschreiten darf. Durch eine Validierung der im Abbildaufruf enthaltenen Parameter kann auch eine Authentifizierung und Autorisierung der abrufenden Stelle - beispielsweise das Registrierungsmodul oder ein Gerät, an dem die containerbasierte Anwendung zum Ablauf zu bringen ist - gewährleistet werden.

Gemäß einer vorteilhaften Ausgestaltung ist vorgesehen, die bei Verwendung eines Skripts oder einer Beschreibungssprache dynamisch im Zeitraum der Bereitstellung erzeugte Ergänzung in der individualisierenden Schicht zu überprüfen oder zu plausibilisieren. Soll beispielsweise gewährleistet werden, dass sich die erzeugten Abbilder bei jedem Abruf tatsächlich unterscheiden - und nicht zufällig zwei identische Individualisierungsschichten erzeugt wurden - kann vorgesehen sein, dass ein Hashwert der individualisierenden Schicht berechnet oder erzeugt wird, welcher dauerhaft gespeichert und mit zuvor gespeicherten Hashwerten verglichen wird.

Gemäß einer vorteilhaften Ausgestaltung ist ein Schritt zur Entgegennahme des Abbildaufrufs von Seiten eines Webservers vorgesehen, gemäß dem der Abbildaufruf als Anfragemethode eines zustandslosen Protokolls zur Übertragung von Daten auf einer Anwendungsschicht - vorzugsweise HTTP oder Hypertext Transfer Protocol - gestaltet ist und wobei das Abrufschema als Argument in diesem zustandslosen Protokoll, insbesondere HTTP, gestaltet ist. Beispielsweise könnte ein Abbildaufruf mit einem Bestandteil »app:1.0.0-randomKey« vorgesehen sein, bei dem das Registrierungsmoduls das Abbild app:1.0.0 abruft und mittels eines Skriptes app.sh um variable Inhalte ergänzt wird.

Gemäß einer vorteilhaften Ausgestaltung ist vorgesehen, der individualisierenden Schicht jeweils unterscheidbare Schlüssellisten zuzuordnen. Gemäß einer vorteilhaften Ausgestaltung ist vorgesehen, dass einer ersten containerbasierten Anwendung zugeordnete erste Schlüsselliste eine Anzahl neuer Schlüssel zugeordnet wird und dass einer zweiten containerbasierten Anwendung zugeordnete zweite Schlüsselliste ein oder mehrere Schlüssel der ersten Schlüsselliste erneut zugeordnet werden und im Übrigen neue Schlüssel erzeugt werden.

Gemäß einer vorteilhaften Ausgestaltung ist das Registrierungsmoduls als Webserver ausgestaltet, welcher Abbildaufrufe für ein bestimmtes Abbild entgegennimmt und anhand einer internen Konfiguration prüft, mit welchem Skript - z.B. mit welcher Docker-Datei - ein solcher Container bereitgestellt werden kann. Das Registrierungsmodul ermittelt dann ein zugrundeliegendes Abbild, welche beispielsweise in der Docker-Datei referenziert ist. Das Registrierungsmoduls beschafft dieses Abbild entsprechend dieser Referenz in der Docker-Datei, ergänzt das Abbild und stellt dieses anschließend bereit.

Gemäß einer vorteilhaften Ausgestaltung ist vorgesehen, die zusätzliche individualisierenden Schicht ganz oder teilweise, oder ein hieraus erzeugtes Merkmal, im Registrierungsmodul zu speichern. So gespeicherte Daten können insbesondere in Verbindung mit Aufzeichnungen darüber, welche Geräte welche Abbilder wann abgerufen haben, dazu verwendet werden, diesen Geräten Informationen darüber zur Verfügung zu stellen, ob es Aktualisierungen gibt oder um im Rahmen eines Gerätewechsels eine bestimmte Variante wiederherzustellen. Die Speicherung der zusätzlichen individualisierenden Schicht zum containerbasierten Abbild kann auch in Verbindung mit weiteren Schichten erfolgen. Die individualisierende Schicht kann dabei auch teilweise erfolgen, worunter insbesondere zu verstehen ist, dass einzelne Teile der individualisierenden Schicht gespeichert werden, insbesondere auch Daten in einem Dateisystem dieser individualisierenden Schicht. Wenn anstatt der kompletten oder teilweisen Speicherung der individualisierenden Schicht einer Speicherung eines hieraus erzeugten Merkmals im Registrierungsmodul der Vorzug zu geben ist - insbesondere aus Gründen der Speicherplatzökonomie - ist das Merkmal vorzugweise als Hashwert zu erzeugen und zu speichern. Die so im Registrierungsmodul gespeicherten Informationen können in vorteilhafter Weise dazu verwendet werden, eine Bereitstellung containerbasierter Abbilder bei weiteren Abbildaufrufen effizienter oder einfacher zu gestalten. Im einfachsten Fall wird zum Beispiel unter Anwendung der im Registrierungsmodul gespeicherten Informationen eine fortlaufend aufsteigende Seriennummer erzeugt, welche in die individualisierende Schicht des oder der darauffolgenden containerbasierter Abbilder eingefügt wird.

### Beschreibung von Ausführungsbeispielen

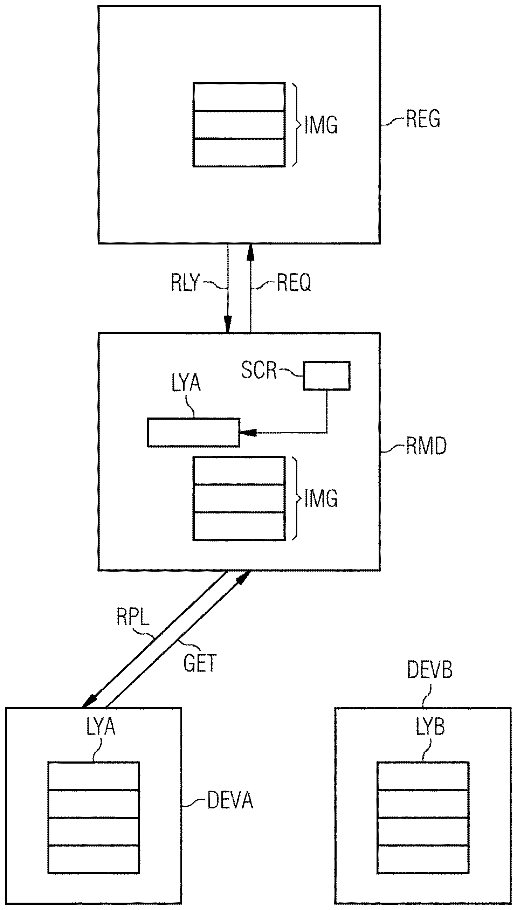

Im Folgenden werden weitere Ausführungsbeispiele und Vorteile der Erfindung anhand der Zeichnung näher erläutert. Dabei zeigt die einzige FIG. eine beispielhafte Darstellung von Funktionseinheiten, die an der Durchführung eines Verfahrens gemäß einer der Ausführungsformen beteiligt sind.

Eine Containervirtualisierung kann mit einer Vielzahl von Softwaretools verwirklicht und verwaltet werden. Beispielsweise können containerisierte Anwendungen mit Docker, Swarm, oder anderen Softwaretools verwaltet werden. Im Folgenden wird eine Terminologie von Funktionseinheiten zur Containervirtualisierung auf Basis einer Containervirtualisierung namens Docker erläutert. Die Verwendung dieser Terminologie erleichtert die Beschreibung der Ausführungsformen, bedeutet aber nicht, dass diese Ausführungsformen auf eine Verwendung von Docker oder einem anderen Softwaretools zur Containervirtualisierung eingeschränkt wären.

Ein Abbild oder Image ist ein Speicherabbild eines Containers. Das Abbild selbst besteht aus mehreren Schichten oder Layers, die vorzugsweise schreibgeschützt sind und somit nicht verändert werden können. Ein Abbild oder Image ist portabel und kann mit anderen Nutzern geteilt werden. Aus einem Abbild oder Image können mehrere Container instanziiert und zum Ablauf gebracht werden. Dementsprechend ist ein Container eine aktive Instanz eines Abbilds. Als Container wird eine laufende Anwendung bezeichnet. Sobald der Container die laufende Anwendung beendet, wird der Container beendet. Eine Schicht oder Layer ist Teil eines Images und enthält einen Befehl oder eine Datei, die dem Image hinzugefügt wurde. Anhand der Schicht kann eine Historie des Abbilds nachvollzogen werden.

Ein Dockerfile oder eine Docker-Datei ist üblicherweise eine Textdatei, die mit verschiedenen Befehlen beschreibt, wie ein Abbild oder ein Imageerzeugt werden kann. Diese Befehlen werden bei einer Ausführung abgearbeitet. Ein Repository ist ein Satz gleichnamiger Images mit verschiedenen Tags, zumeist Versionen. Eine Registry, wie zum Beispiel Docker Hub oder Artifactory, dient der Verwaltung von Repositories.

Im unteren Teil der FIG. sind zwei exemplarische Geräte DEVA, DEVB dargestellt. Ein erstes Gerät DEVA veranlasst in der Darstellung der FIG. einen Abbildaufruf GET zum Bereitstellen eines containerbasierten Abbilds an ein Registrierungsmodul RMD, welches gemäß einer der beschriebenen Ausführungsformen ausgestaltet ist. Das Registrierungsmodul RMD nimmt den Abbildaufruf GET entgegen. Der Abbildaufruf ist in diesem Ausführungsbeispiel als Anfragemethode »GET« eines zustandslosen Protokolls HTTP oder Hypertext Transfer Protocol zur Übertragung von Daten auf einer Anwendungsschicht gestaltet und weist beispielsweise folgende Struktur auf:
GET app:1.0.0/randomkey

Die auf die Anfragemethode »GET« folgende Zeichenfolge spezifiziert die Art der angeforderten Ressource, hier eine containerbasierte Anwendung »app«, deren mit einem Doppelpunkt folgende Version in der Version 1.0.0 angefordert wird. Im weiteren Verlauf der Zeichenkette der Anfragemethode »GET« folgt noch ein hier mit einem Schrägstrich getrenntes Abrufschema »randomkey« als HTTP-Argument. Der Abbildaufruf GET beinhaltet eine Anweisung zur Bereitstellung eines Abbilds unter Nutzung einer weiteren so aus dem Stand der Technik bekannter Registry REG oder Repository.

Nach Entnahme aller Anweisungen und Argumente aus dem Abbildaufruf GET wird seitens des Registrierungsmodul RMD eine Verwendung - oder alternativ, nicht dargestellt: Erstellung - des angeforderten containerbasierten Abbilds nach Maßgabe des Abbildaufrufs GET veranlasst. Nach Maßgabe des Abbildaufrufs GET ist eine containerbasierte Anwendung »app« in der Version 1.0.0 zu liefern. In Antwort auf einem untenstehenden näher erläuterten Datenbankaufruf REQ wird dem Registrierungsmodul RMD mit einer Antwort RLY von der Registry REG ein aus mehreren Schichten bestehendes containerbasiertes Abbild IMG als passend mitgeteilt und an das Registrierungsmodul RMD übertragen. Das Registrierungsmodul RMD und die Registry REG können, alternativ zu der Darstellung der Zeichnung, auch auf ein und demselben Gerät und/oder als ein und derselbe Dienst realisiert sein.

In einem folgenden Schritt wird nun seitens des Registrierungsmodul RMD entsprechend der Vorgabe des Abrufschemas »randomkey« ein Skript SCR ausgeführt. Ein in diesem Skript definierte Funktion randomkey erzeugt im Ausführungsbeispiel einen zufälligen Schlüssel, welcher einer zusätzlichen individualisierenden Schicht LYA zum containerbasierten Abbild IMG hinzugefügt wird. Durch die Zufälligkeit dieses Schlüssels ist in diesem Ausführungsbespiel mit hinreichender Sicherheit gewährleistet, dass sich das containerbasierte Abbild in zumindest einem Paramater von den zuvor durch das Registrierungsmodul RMD erzeugten containerbasierten Abbildern unterscheidet, insbesondere von dem mit einer zusätzlichen individualisierenden Schicht LYB erweiterten containerbasierten Abbild, das zuvor dem zweiten Gerät DEVB zugewiesen wurde.

Das so mit der zusätzlichen individualisierenden Schicht LYA erweiterte containerbasierte Abbild wird vom Registrierungsmodul im Rahmen einer oder mehrerer Antwortnachrichten RPL an das erste Gerät DEVA übertragen, wo es auf einem dortigen Hostsystem instanziiert wird, um dort als containerbasierten Anwendung ihren Betrieb aufzunehmen.

Das folgende Codebeispiel zeigt eine mögliche Struktur eines Abrufschemas bezüglich einer im Bestand der Registry REG befindlichen containerbasierte Anwendung »app«, welche, abweichend vom oben gesagten, nicht in Versionsnummern wie z.B. 1.0.0 charakterisiert wird, sondern in einer Datumsangabe:

```
 patterns = [
   path("app:2003/", app/special_case_2003/Dockerfile),
   path("app:int:year>/", app/year_archive/Dockerfile),
   path("app:int:year>/<int:month>/", app/month_archive/Dockerfile),
   path("app:int:year>/<int:month>/<slug:slug>/", app/article_detail/Dockerfile),
   ]
```

Dieses Abrufschema definiert eine Liste von Mustern für die containerbasierte Anwendung, bei der jedes Muster mit einer spezifischen Datei verknüpft:

```
 "app:2003/": Verknüpft mit special_case_2003/Dockerfile;
 "app:int:year>/": Verknüpft mit year_archive/Dockerfile;
 "app:int:year>/int:month/": Verknüpft mit month_archive/Dockerfile; und;
 "app:int:year>/int:month/slug:slug/": Verknüpft mit article_detail/Dockerfile.
```

Während im obigen Ausführungsbeispiel eine Zufälligkeit eines Schlüssels die Unterscheidbarkeit des mit der zusätzlichen individualisierenden Schicht LYA erweiterten containerbasierte Abbild von anderen containerbasierten Abbildern - insbesondere von dem mit der zusätzlichen individualisierenden Schicht LYB erweiterten containerbasierten Abbild, welches zuvor an das zweiten Geräts DEVB übertragen und dort instanziiert wurde - gewährleistet und damit, mit anderen Worten, eine Herstellung einer Identität der schließlich auf dem ersten Gerät DEVA zum Ablauf gebrachten containerbasierten Anwendung sicherstellt, wird im folgenden Abschnitt ein alternatives Verfahren zur Herstellung einer Identität erläutert.

Gemäß dem im folgenden erläuterten Ausführungsbeispiel ist vorgesehen, dass für eine erste Anwendung (App 1 in untenstehender Tabelle) eine Schlüsselliste (1,2,3,4,5erstellt wird, welche der Zeile App 1 in untenstehender Tabelle entspricht. Dabei wird innerhalb eines bestimmten Zeitraums eine gleiche Kennung verwendet. Die Schlüsselliste enthält zufällige Zeichenketten, die als neue Schlüssel dienen.

Für weiteren Geräte zugewiesene weitere Anwendungen (App2 bis App 6 in untenstehender Tabelle) wird aus jeder Schlüsselliste ein Schlüssel einmalig erneut zugewiesen. Zusätzlich werden neue Schlüssel erzeugt, um die Schlüsselliste bis zu einer vorgebbaren Anzahl (hier 5) zu vervollständigen. Für erwartete sechs Anwendungen (App1 bis App 6 in untenstehender Tabelle) ergibt sich das in der untenstehenden Tabelle gezeigte Schema zur Nutzung symmetrischer Schlüssel in Gruppen 1 bis 15.

| | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| App 1 | 1 | 2 | 3 | 4 | 5 | | | | | | | | | | |
| App 2 | 1 | | | | | 6 | 7 | 8 | 9 | | | | | | |
| App 3 | | 2 | | | | 6 | | | | 10 | 11 | 12 | | | |
| App 4 | | | 3 | | | | 7 | | | 10 | | | 13 | 14 | |
| App 5 | | | | 4 | | | | 8 | | | 11 | | 13 | | 15 |
| App 6 | | | | | 5 | | | | 9 | | | 12 | | 14 | 15 |

Dieses Ausführungsbeispiel ist nicht auf eine Zuweisung symmetrischer Schlüssel beschränkt, sondern erlaubt eine Verteilung und Integration beliebiger Daten, z.B. auch zufälliger Zeichenketten, um eine Identität der jeweiligen containerbasierten Anwendung zu gewährleisten.

Das erfindungsgemäße Verfahren zur Bereitstellung einer containerbasierten Anwendung in einer Containervirtualisierung umfasst die Entgegennahme eines Abbildaufrufs, Erstellung eines mehrschichtigen Abbilds, Hinzufügung einer individualisierenden Schicht und Instanziierung des Abbilds auf einem Hostsystem zur Ausführung der Anwendung. Die erfindungsgemäße Bereitstellung unterscheidbarer Instanzen wird gelöst durch eine Containerregistrierung, bei der zumindest eine Schicht eines Containers im Zuge eines Abbildaufrufs erzeugt wird, sodass bei jedem Abbildaufruf eine andere Variante des Abbilds (Images) erzeugt und/oder bereitgestellt werden kann.

## Patentansprüche

1. Verfahren zum Bereitstellen einer containerbasierten Anwendung, umfassend folgende durchzuführenden Schritte:
- Entgegennahme eines Abbildaufrufs zum Bereitstellen eines containerbasierten Abbilds;
- Verwendung oder Erstellung eines aus mehreren Schichten bestehenden containerbasierten Abbilds nach Maßgabe des Abbildaufrufs;
- Hinzufügung zumindest einer zusätzlichen individualisierenden Schicht zum containerbasierten Abbild, so dass sich das containerbasierte Abbild in zumindest einem Paramater von mindestens einem zuvor durch das Registrierungsmodul erzeugten containerbasierten Abbild unterscheidet;
- Instanziierung des containerbasierten Abbilds auf einem Hostsystem zum Betrieb der containerbasierten Anwendung.

2. Verfahren gemäß Patentanspruch 1, **gekennzeichnet durch**:
Erfassung eines Abrufschemas als Bestandteil des Abbildaufrufs, wobei das Abrufschema eine Struktur der individualisierenden Schicht beschreibt.

3. Verfahren gemäß Patentanspruch 2, wobei das Abrufschema zumindest eine Anweisung zur Verwendung eines Skripts oder einer Beschreibungssprache enthält, welche zur Erzeugung der individualisierenden Schicht verwendet werden soll.

4. Verfahren gemäß einem der vorgenannten Patentansprüche 2 und 3, **gekennzeichnet durch**: Entgegennahme des Abbildaufrufs von Seiten eines Webservers, wobei der Abbildaufruf als Anfragemethode eines zustandslosen Protokolls zur Übertragung von Daten auf einer Anwendungsschicht gestaltet ist und wobei das Abrufschema als Argument des besagten zustandslosen Protokolls gestaltet ist.

5. Verfahren gemäß einem der vorgenannten Patentansprüche, wobei der individualisierenden Schicht jeweils unterscheidbare Schlüssellisten zugeordnet werden.

6. Verfahren gemäß Patentanspruch 5, wobei einer einer ersten containerbasierten Anwendung zugeordnete erste Schlüsselliste eine Anzahl neuer Schlüssel zugeordnet wird und wobei einer einer zweiten containerbasierten Anwendung zugeordnete zweite Schlüsselliste ein oder mehrere Schlüssel der ersten Schlüsselliste erneut zugeordnet wird und im Übrigen neue Schlüssel erzeugt werden.

7. Verfahren gemäß einem der vorgenannten Patentansprüche, wobei die zumindest ein Teil der Daten in der zusätzlichen individualisierenden Schicht und/oder ein hieraus erzeugtes Merkmal, insbesondere ein Hashwert, im Registrierungsmodul gespeichert wird.

8. Registrierungsmodul zum Bereitstellen einer containerbasierten Anwendung in Zusammenwirkung mit einem Hostsystem zur Instanziierung des containerbasierten Abbilds und zum Betrieb der containerbasierten Anwendung, umfassend:
- eine Schnittstelle zur Entgegennahme eines Abbildaufrufs zum Bereitstellen eines containerbasierten Abbilds;
- Steuerungsmittel zur Verwendung oder Erstellung eines aus mehreren Schichten bestehenden containerbasierten Abbilds nach Maßgabe des Abbildaufrufs;
- die Steuerungsmittel eingerichtet zur Hinzufügung zumindest einer zusätzlichen individualisierenden Schicht zum containerbasierten Abbild, so dass sich das containerbasierte Abbild in zumindest einem Paramater von mindestens einem zuvor durch das Registrierungsmodul erzeugten containerbasierten Abbild unterscheidet;
- die Schnittstelle eingerichtet zur Übertragung des containerbasierten Abbilds auf ein Hostsystem.
